# EUROPEAN PATENT APPLICATION

(11) **EP 2 104 269 A1**
(43) Date of publication of application: **23.09.2009**
(21) Application number: 08102670.0
(22) Date of filing: 17.03.2008
(51) Int. Cl.: H04L 9/32, G06F 21/00

(54) **An electronic control unit (ECU) and a method for verifying data integrity**

(71) Applicant: ROBERT BOSCH GMBH, 70442 Stuttgart (DE)
(72) Inventor: Liakos, Ioannis, 70199, Stuttgart (DE); Haecker, Joerg, 73732, Esslingen (DE); Haendel, Andreas, 74391, Erligheim (DE); Munz, Thomas, 73730, Esslingen (DE); Kopp, Oliver, 70469, Stuttgart (DE)

(57) **Abstract**

A battery power source comprises a plurality of battery modules connected in series and arranged in a case in a three-dimensionally parallel arrangement. A resistance for preventing a rush current is interposed in series between the terminals of the battery power source and an external load. A circuit provided with a relay allows to by-pass the resistance.

## Description

### State of the Art

The invention relates to an Electronic Control Unit ( ECU ) and a method for verifying the data integrity of the data in the ECU.

The patents US 7,136,487 and US 6,957,333 disclose use of public key-private key encryption and decryption. The US 2004230803A1 discloses a controller where the software supplier generates a signature of the software supplied, a trust centre generates a signature of the public key of the software supplier and the controller first verifies the public key of the software supplier and then verifies the software. The US 20060193475 A1 discloses a method for signing a dataset. EP 1083699 A1 discloses an information sharing system using encryption. The US 20070116269 A1 discloses a method and apparatus for securely transmitting a sequence of public keys.

### Advantages of the invention

The ECU and the method for performing data integrity checks, with the features of the independent patent claims have the below advantages:

The invention has the advantage that the responsibility for the data security can be freely distributed between supplier of the ECU and user of the ECU. The person who supplies the public keys and keeps the private keys has full responsibility to ensure the integrity of the data. This person need not be necessarily the supplier of the ECU. The person supplying the keys can decide on his own, whom to give the public or private keys to ensure the data integrity. In the case of car manufacturer (Original Equipment Manufacturer OEM ) and supplier of the ECU, the management of data integrity can be given to the OEM. This allows that the OEM decides which data sets are entered in the ECU at the final stage of the production of the vehicle, without the need to communicate this information to the supplier of ECU.

The public keys used to verify signatures of the data sets, are verified by a master public key to ensure that the complete data in the ECU is valid and changed only by the authorised person.

Further improvements and/or advantages are realised by the features of the dependent patent claims.

The data sets can be easily modified by transferring them from the ECU to any device which has private keys for the corresponding data sets, changing the data, generating a signature using the private keys corresponding to the public keys for these data sets and transferring back the data sets to the ECU. In this way the modifications to the data sets can be done by different persons who are authorised to do it. The verification of the data sets is done by the ECU using the public keys stored in the key storage area.

The key storage area where the public keys are stored may contain further information about data sets like the count of data sets, the addresses of the data sets, their length, the addresses of the signatures corresponding to data sets etc. This pre-computed information will make the accessing of the data and signatures faster and the data integrity checks will run efficiently. Also this will provide flexibility to have a variable count of public keys, data sets of variable sizes, flexibility to locate the data sets and the signature to any available space in the memory. Further, it is not necessary to communicate this information in advance to a supplier or manufacturer of the ECU.

### Brief description of the drawings:

Different embodiments of the invention are shown in the drawing and are described in detail in the description.
- Figure 1: shows an ECU and a person generating the key pairs.
- Figure 2: shows an ECU and a person generating the key pairs and further information contained in key storage area.

### Description of the embodiments:

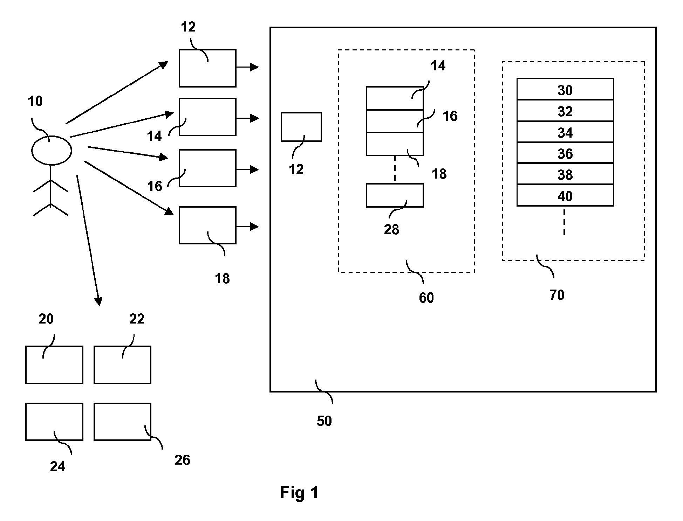

Fig. 1 shows the schematic of an ECU 50, a person 10. The person 10 is generating all the public keys and private keys - a Master public key 12, a set of public keys 14, 16 and 18, a Master private key 20, a set of private keys 22, 24 and 26.

The Master public key 12 is stored in the ECU. The ECU also contains a key storage area 60 and a data area 70. The key storage area 60 contains public keys 14, 16 and 18 and a signature 28 of the public keys 14, 16 and 18. The data area 70 contains the data sets 30, 34 and 38 and also the signatures 32, 36 and 40 corresponding to data sets 30, 34 and 38. Here only 3 data sets are taken as example, but the number of data sets may vary.

The master public key 12 is associated to the master private key 20. The master public key 12 is used to verify the signature 28 of the key storage area. The public keys 14, 16 and 18 are associated to private keys 22, 24 and 26 respectively. The public keys 14, 16 and 18 are used to verify the signatures 32, 36 and 40.

The master private key 20 and the private keys 22, 24, 26 are kept secret and given by the person 10, only to authorised persons who need to modify the data sets 30, 34 and 38

Electronic devices performing data integrity checks using different methods are known in the state of the art. One of the widely used method is - Public key cryptography, also known as asymmetric cryptography, is a form of cryptography in which a user has a pair of cryptographic keys - a public key and a private key. The private key is kept secret, while the public key may be widely distributed. The keys are related mathematically, but the private key cannot be derived from the public key.

A signature generated for key storage area or data sets using a corresponding private key can be verified by anyone who has access to the corresponding public key, thereby proving that the key storage area or data sets have not been tampered with. This is used to ensure authenticity of the data.

As explained in the advantages of the invention, the invention deals with data integrity checks of different data sets. The different data sets are modified by different persons who are authorised to do so. The authority to modify a particular data set may be given to one specific person or more. The decision to give this authority rests with the person generating the public keys and private keys. This authority may rest with the OEM:

One typical scenario is application of the invention to an automobile manufacturing plant and an automobile service station. The automobile plant will be authorised to modify multiple data sets, but the service stations may be authorised to modify only relevant data sets. For example a service station may need to calibrate a particular data set in the ECU with new values based on the engine conditions. The data set is read from the ECU into an external device having the private key for the required data set. The data set is updated with the new vales, a new signature is generated. The modified data set along with the signature is transferred to the ECU. During the next cycle of data integrity check, the ECU will evaluate the modified data set to make sure that the modifications are made by authorised persons.

In this way the vehicle manufacturers can prevent the modifications of data sets by unauthorised persons.

As shown in Fig. 1, the OEM generates a Master public key 12 and a Master private key 20. The OEM gives the Master public key 12 to the supplier of the ECU 50. The supplier provides the ECU with software and also stores the master public key 12 into the ECU.

The OEM also generates a set of public keys 14, 16, 18 and a corresponding set of private keys 22, 24 and 26.

The OEM using an external device which is not shown in the figure, programs the key storage area 60 which contains public keys 14, 16, 18 and the signature 28. The signature 26 is generated using the below steps
- generate the checksum of the public keys 14, 16 and 18 or generate a hash value using hash functions like MD5 and SHA-1 for the public keys 14, 16 and 18.
- encrypt the checksum or the hash value using the Master private key 20

The key storage area is programmed in the external device and transferred to the ECU 50.

Now the OEM can distribute the private keys 22, 24 and 26 to authorised persons who need to change the data sets 30, 34 and 38.

The ECU may perform the data integrity checks on power on or also at regular intervals to ensure that the data is not changed by unauthorised persons. Also there may be different triggers like start of engine, engine idling etc. to start the data integrity checks. The frequency and the triggers for the data integrity checks may vary from vehicle to vehicle. Also the data integrity checks may be performed in parts in different cycles, example: Data integrity check of key storage area in one cycle and data integrity check of data sets in next cycle etc. The steps involved in performing the data integrity checks are explained below.

The ECU generates the checksum or the hash value of the public keys 14, 16 and 18. The signature 28 is decrypted using the Master public key 12. The decrypted value of the signature 28 and the checksum or the hash value generated are compared. The two match if the public keys 14, 16 and 18 are not tampered with.

The similarly check is performed on data sets 30, 34 and 38. First the checksum or the hash value for Data set 30 is generated. The signature 32 corresponding to data set 30 is decrypted using the public key 14. These two will match if the signature 32 was generated using a valid private key 22. These steps will be repeated for data sets 34 and 38. For the data set 34, the signature 36 is decrypted using public key 16. For the data set 38, the signature 40 is decrypted using public key 18.

If the checksum or the hash value and the decrypted value of signature do not match for either of the areas i.e. key storage area or data area, the data integrity check fails indicating that the data has been modified by unauthorised persons without having valid private keys. This may lead to malfunctioning of the ECU by using tampered data. Different scenarios might arise because of the malfunction.

If the ECU detects unauthorised modifications of the data, the ECU will enter into a fault mode referred as "Data manipulated mode". This mode may prompt some audio visual indications to the driver. Also some security measures may come into effect automatically like, the vehicle may not pick up speed and may slowly come to a halt.

The above steps explain how the data integrity check is performed. The below steps explain how the data sets are modified by authorised persons.

Suppose the Data set 34 needs to be modified by an authorised person. The data set 34 will be transferred to an external device not shown in the figure. The external device needs to be equipped with the private key 24. This key is supplied by the OEM to the person who is authorised to change the data set 34.

The external device modifies the data set 34 according to the needs. A checksum or the hash value for the data set 34 is generated. This checksum or the hash value is encrypted using the private key 24 and stored as signature 36. The data set 34 and the signature 36 are transferred back to the ECU and stored in the ECU.

During the next cycle of data integrity check, the modified data set is evaluated as explained previously.

It is also possible to generate a completely new data set and replace the old data set in the ECU. This does not require the transfer of the old data set from the ECU to the external tester.

In a single operation, multiple data sets can be transferred from the ECU to the external device which is equipped with corresponding multiple private keys and more than one data set can be modified at a time. After modifying the required data sets, the corresponding signatures are generated using the corresponding private keys. The modified data sets and the corresponding signatures will be transferred to the ECU and the ECU will verify the validity of the complete data set as explained above.

Also the data sets can be created or updated by the authorised persons and sent over internet or other modes of transmissions to different locations where the data set needs to be used. In this case the updated data set already contains the new signature. The data set just needs to be transferred to the ECU and the ECU will verify the validity of the complete data set as explained above.

In the embodiment shown in the Fig 1, the further information about the key storage area and further information about data area, like the count of public keys available, the count of data sets available, the addresses of the data sets, the addresses of the signatures, etc. is fixed, which is known to the software performing the data integrity checks. This will fix the count of data sets and their locations in the memory.

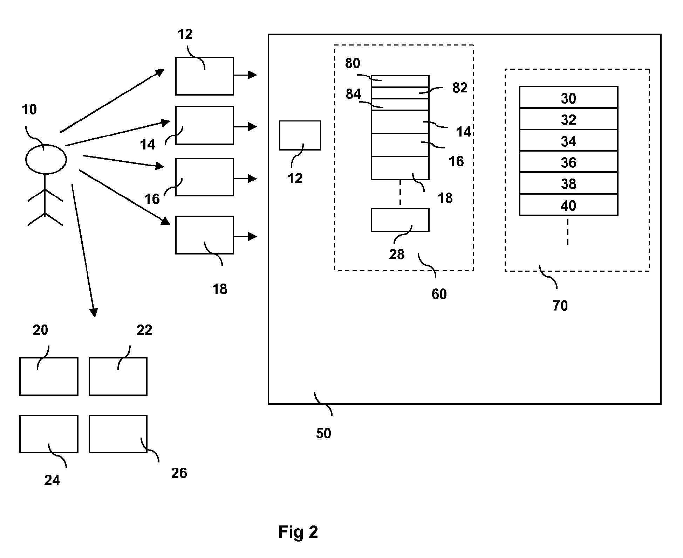

The Fig 2 shows another embodiment of the invention. The Fig 2 has all the blocks of the Fig 1 and additional information about the Public keys and the data sets. The key storage area 60 contains the count 80 of public keys available in the ECU. This will give flexibility for the users of the ECU to have variable count of public keys so that number of data sets can be increased or decreased by varying the count of public keys. If the user wants to have 5 data sets, he has to store a value of 5 in the count 80, generate 5 pairs of public keys and private keys. This is achieved without having to communicate this increase in data sets to the ECU supplier.

The key storage area 60 also contains the address 82 of the data sets in the memory, the address 84 of the signatures of the data sets in the memory. This will give the flexibility to locate the data sets and their signatures anywhere in the memory available. Also the addresses of the data sets and the corresponding signatures are protected by the signature 28. Whenever the address of the data sets 82 or the address of the signatures 84 change, a new signature 28 needs to be generated.

The functioning of the embodiment in Fig 2 is similar to the Fig 1. The data integrity check software first gets the count 80 of the public keys. It accordingly picks up the public keys 14, 16, 18 and others public keys if stored and verifies their validity using the Signature 28.

The data integrity check software reads the address 82 of the data sets, then reads the data from the address 82, computes the checksum or the hash value, picks up the signatures from the address 84, decrypts the signature and compares the decrypted signature with the checksum or the hash value.

## Claims

1. An electronic control unit (ECU) being capable of performing data integrity check, **characterised by**,
- a data area containing plurality of data sets protected by plurality of first signatures, each first signature corresponding to one data set,
- a key storage area containing a plurality of public keys used to check the data integrity of data sets using the first signatures, key storage area being protected by a second signature,
- a master pubic key,
- a verification module performing the data integrity checks of the data area and key storage area.

2. An ECU according to claim 1, wherein the data area is generated or modified externally and transferred to the ECU.

3. An ECU according to claim 1, wherein the plurality of first signatures and the second signature are generated externally and transferred to ECU.

4. An ECU according to claim 3, wherein the plurality of first signatures are generated by - first computing a checksum or a hash value of a data set and then encrypting the checksum or the hash value using a corresponding first private key from a plurality of first private keys and repeating the process for all the data sets in the data area.

5. An ECU according to claim 3, wherein the second signature is generated by - first computing the checksum or the hash value of the key storage area and then encrypting the checksum or the hash value using a master private key.

6. An ECU according to claim 1, wherein the key storage area may further contain information about the data sets, their addresses, number of data sets, further information about the public keys being protected, number of public keys, their addresses.

7. The checksum according to claim 4 and 5 is generated by simple mechanisms like adding all the bytes or using XOR operation on all the bytes in the corresponding area and/or the hash value is generated using hash functions.

8. Method for verifying the data integrity in an ECU, comprising the steps of
- generating a checksum or the hash value for a key storage area, decrypting the signature of the key storage area using a master public key, comparing the checksum or the hash value with decrypted signature of the key storage area,
- generating checksums or the hash values for individual data sets in a data area, decrypting the signatures of individual data sets in the data area using corresponding public keys from the key storage area, comparing the checksums or the hash values with corresponding decrypted signatures of data sets in the data area,
- If any of the step a or b fails, then bringing the ECU into a "data manipulated mode"

9. A method according to claim 8 **characterised by** the ECU using the contents of the data set stored in the data area

## Amended claims

### Amended claims in accordance with Rule 137(2) EPC.

**1.** Method for providing authorization to persons for modification of data sets in an ECU, comprising the steps:
- generating a master public key (12) and an associated master private key(20), a set of public keys (14,16,18) and associated private keys (22,24,26)
- using the master private key (20) to generate a signature (28) of the set of public keys (14, 16, 18)
- storing the set of public keys (14, 16, 18) and the signature (28) of the set of public keys in the ECU (50)
- distributing the associated private keys (22,24,26) to the authorized persons who are responsible for modifying the specific data sets, the authorized person modifying the data set and using the private key to generate a signature of the data set, the data set and the signature of the data set transferred to the ECU (50).
- ECU (50) verifying the signature (28) of the set of public keys (14, 16, 18) using the master public key (12)
- ECU verifying the signatures (32, 36, 40) of the data sets (32, 36, 40) using the associated public keys (14, 16, 18)

**2.** A method according to claim 1 where in the data sets are modified independent of each other.

**3.** A method according to claim 1 where in a data set is modified by one or more authorised persons.
